# EUROPÄISCHE PATENTANMELDUNG

(11) **EP 1 077 235 A1**
(43) Veröffentlichungstag der Anmeldung: **21.02.2001**
(21) Anmeldenummer: 00113997.1
(22) Anmeldetag: 01.07.2000
(51) Int. Cl.: C09C 1/00, C08K 3/22

(54) **Mangan-Antimon-Rutilmischphasenpigmente**

(30) Priorität: 19.08.1999 DE 19939263
(71) Anmelder: BASF AKTIENGESELLSCHAFT, 67056 Ludwigshafen (DE)
(72) Erfinder: Reisacher, Hansulrich, Dr., 67133 Maxdorf (DE)

(57) **Zusammenfassung**

Mangan-Antimon-Rutilmischphasenpigmente, erhältlich durch Calcinierung der Oxide oder Oxidhydrate von Mangan, Antimon und Titan oder in die Oxide überführbarer Salze dieser Metalle in Gegenwart eines oder mehrerer Natrium- und/oder Kaliumsalze,
sowie Herstellung und Verwendung dieser Pigmente zur Einfärbung von Kunststoffen, Lacken, Druckfarben und keramischen Glasuren.

## Beschreibung

Die vorliegende Erfindung betrifft neue Mangan-Antimon-Rutilmischphasenpigmente, welche durch Calcinierung der Oxide oder Oxidhydrate von Mangen, Antimon und Titan oder in die Oxide überführbarer Salze dieser Metalle in Gegenwart eines oder mehrerer Natrium- und/oder Kaliumsalze erhältlich sind.

Außerdem betrifft die Erfindung die Herstellung dieser Pigmente und ihre Verwendung zum Einfärben von Kunststoffen, Lacken, Druckfarben und keramischen Glasuren.

Rutilmischphasenpigmente sind schon seit langem bekannt. Darunter versteht man Buntpigmente, die durch den Einbau farbiger Übergangsmetallkationen in das Kristallgitter des Rutils erhalten werden. Vornehmlich werden dabei solche Metallkationen als Gastkomponente in das Rutil-Wirtsgitter eingebaut, deren Kationenradius größenordnungsmäßig mit dem Titan(IV)-Ionenradius vergleichbar ist. Weicht die Oxidationszahl des farbigen Kations von der des Titan(IV) ab, so wird zum statistischen Valenzausgleich ein weiteres Kation mit anderer, entsprechend höherer oder niedrigerer, Oxidationszahl eingebaut. Die Mischphasenpigmente werden üblicherweise durch Calcinieren der entsprechenden Metalloxide oder die Metalloxide bildender Metallsalze hergestellt, wobei häufig Alkali- oder Erdalkalimetallfluoride als Flußmittel zur Erniedrigung der Brenntemperatur bzw. Verkürzung der Brenndauer eingesetzt werden.

Große technische Bedeutung haben insbesondere Nickel- und Chrom-Rutilmischphasenpigmente erlangt, die neben Nickel(II) bzw. Chrom(III) zusätzlich noch Antimon(V) enthalten (Nickelrutilgelb bzw. Chromrutilgelb; vgl. Ullmann's Encyclopedia of Industrial Chemistry, 5th Ed., Vol. A20, 307 - 308 (1992)).

Daneben ist eine Vielzahl von andere Metallkationen enthaltenden Mischphasen beschrieben. Aus der DE-A-14 17 246 sind Mangan-Anti-mon-Rutilmischphasenpigmente bekannt, die auch weitere Metallkationen wie Eisen(III) enthalten können. Nach den Angaben der DE-A-14 17 246 können auch einwertige Metallkationen eingebaut sein, die jedoch nur einen Ionenradius zwischen 0,53 und 0,90 Å aufweisen sollen.

Die bekannten Mangan-Rutilmischphasenpigmente sind nicht immer zufriedenstellend. Insbesondere bestand Bedarf an farbstärkeren braunen Pigmenten.

Der Erfindung lag daher die Aufgabe zugrunde, diesem Mangel abzuhelfen und Mangan-Rutilmischphasenpigmente bereitzustellen, die vorteilhafte Anwendungseigenschaften, insbesondere auch eine hohe Farbstärke, aufweisen.

Demgemäß wurden Mangan-Antimon-Rutilmischphasenpigmente gefunden, welche durch Calcinierung der Oxide oder Oxidhydrate von Mangen, Antimon und Titan oder in die Oxide überführbarer Salze dieser Metalle in Gegenwart eines oder mehrerer Natrium- und/oder Kaliumsalze erhältlich sind.

Außerdem wurde ein Verfahren zur Herstellung dieser Mangan-Antimon-Rutilmischphasenpigmente gefunden, welches dadurch gekennzeichnet ist, daß man die Oxide oder Oxidhydrate von Titan, Mangan und Antimon oder in die Oxide überführbare Salze dieser Metalle intensiv mit dein Natrium- und/oder Kaliumsalz mischt und die erhaltene Mischung unter oxidierenden Bedingungen bei 900 bis 1200°C calciniert.

Weiterhin wurde die Verwendung dieser Mangan-Antimon-Rutilmischphasenpigmente zur Einfärbung von Kunststoffen, Lacken, Druckfarben und keramischen Glasuren gefunden.

Die erfindungsgemäßen Rutilmischphasenpigmente des Dreistoffsystems Titan, Mangan und Antimon sind durch Calcinierung der für diese Pigmente üblichen Ausgangsverbindungen in Gegenwart eines oder mehrerer Natrium- und/oder Kaliumsalze erhältlich.

Bevorzugt werden dabei 0,5 bis 4 Gew.-%, besonders bevorzugt 0,5 bis 2 Gew.-% und ganz besonders bevorzugt 1 bis 2 Gew.-%, des Natrium- und/oder Kaliumsalzes, jeweils berechnet als Natrium oder Kalium und bezogen auf die calcinierte Rohmischung, eingesetzt.

Als Natrium- bzw. Kaliumsalz eignen sich dabei vor allem die Natrium- und Kaliumnitrate, -sulfate, -carbonate, -chloride und -hydroxide, wobei die Nitrate, Sulfate und Chloride bevorzugt sind.

Vorzugsweise weisen die erfindungsgemäßen Rutilmischphasenpigmente eine Zusammensetzung von 5 bis 90 Gew.-% Titandioxid, 3 bis 70 Gew.-% Manganoxid, berechnet als Mangan(II)oxid (daneben kann auch Mangan(III)oxid und/oder Mangan(IV)oxid vorliegen), 5 bis 40 Gew.-% Antimon(V)oxid und 0,02 bis 4 Gew.-%, insbesondere 0,04 bis 2 Gew.-%, Natrium, Kalium oder einer Mischung dieser Metalle, auf.

Die erfindungsgemäßen Rutilmischphasenpigmente haben eine Primärteilchengröße von üblicherweise ≤ 0,3 µm und zeichnen sich dementsprechend durch eine deutlich erhöhte Farbstärke aus. Weitere vorteilhafte Anwendungseigenschaften sind die guten Echtheiten, wobei insbesondere die hohe Thermostabilität, Chemikalienbeständigkeit und die Wetterechtheit zu nennen sind.

Die erfindungsgemäßen Rutilmischphasenpigmente sind nach dem ebenfalls erfindungsgemäßen Verfahren durch intensives Mischen der Metalloxide oder -oxidhydrate oder in die Oxide überführbarer Metallsalze mit dem Natrium- und/oder Kaliumsalze und anschließende Calcinierung erhältlich.

Geeignete Titan-, Mangan- und Antimonsalze, die bei Calcinierung die gewünschten Oxide liefern, sind z.B. Carbonate, Sulfate, Chloride, Nitrate und Hydroxide.

Im einzelnen seien beispielhaft folgende bevorzugte Ausgangsverbindungen genannt:
- TiO₂ in den Modifikationen Rutil und Anatas, das bevorzugt nicht oberflächenbehandelt ist und dessen BET-Oberfläche bevorzugt 2 bis 20 m²/g beträgt, sowie Titanoxidhydrate wie Metatitansäure H₂TiO₃ und Titansäure H₄TiO₄;
- Mangan(II)sulfat, Mangan(II)carbonat, Mangan(II)nitrat, Mangan(II)hydroxid und Braunstein (Mangan(IV)oxid);
- Antimon(III)oxid, dessen BET-Oberfläche bevorzugt 1 bis 5 m²/g beträgt und das bei der Calcinierung zu Antimon(V)oxid oxidiert wird.

Der erste Schritt des erfindungsgemäßen Verfahrens besteht darin, alle gewählten Ausgangsverbindungen intensiv zu mischen, was sowohl naß als auch insbesondere trocken möglich ist.

Man kann die Mischung der Ausgangsverbindungen jedoch auch herstellen, indem man die Hydroxide und/oder Carbonate gemeinsam aus wäßrigen Lösungen löslicher Salze der Metalle ausfällt und den erhaltenen Niederschlag abfiltriert und trocknet.

Der zweite Schritt des erfindungsgemäßen Verfahrens, die Calcinierung, wird bei 900 bis 1200°C unter oxidierenden Bedingungen vorgenommen. Zur Aufrechterhaltung der oxidierenden Atmosphäre können Oxidationsmittel wie Luft oder Salpetersäure in den Ofen eingeleitet werden. Üblicherweise dauert die Calcinierung 0,5 bis 10 h, insbesondere 0,5 bis 2 h.

Das abgekühlte Calcinierungsprodukt wird zweckmäßigerweise einem Zerkleinerungsschritt (Trocken- oder Naßmahlung) unterzogen, wobei eine Naßmahlung, insbesondere in wäßriger Suspension, bevorzugt ist. Die bei der Naßmahlung erhaltene Suspension wird anschließend getrocknet, wofür auch ein Sprühtrockner verwendet werden kann, der üblicherweise ein Granulat aus überwiegend kugelförmigen, etwa 5 bis 3000 µm großen Pigmentteilchen liefert.

Selbstverständlich können die erfindungsgemäßen Rutilmischphasenpigmente auch einer für derartige Pigmente üblichen Nachbehandlung mit Laugen oder Beschichtung mit Metalloxiden unterzogen werden (z.B. DE-A-27 14 654, DE-A-29 36 746, EP-A-75 197).

Die erfindungsgemäßen Rutilmischphasenpigmente können vorteilhaft zur Einfärbung von Kunststoffen, Lacken, Druckfarben und keramischen Glasuren verwendet werden. Sie zeichnen sich dabei durch hohe Thermostabilität, gute Chemikalienbeständigkeit und gute Wetterechtheit sowie insbesondere durch ihre hohe Farbstärke aus.

### Beispiele

Herstellung und Anwendung von erfindungsgemäßen Rutilmischphasenpigmenten

Zur Beurteilung der Farbstärke (Angabe der Färbeäquivalente FAE) der erhaltenen Rutilmischphasenpigmente wurde die Weißaufhellung einer jeweils wie folgt hergestellten PVC-Ausfärbung untersucht:

Eine Mischung aus 3,5 g PVC-Paste (Falcosol® K-ST 6101, Fa. Follan, Minden), 1,6 g Titandioxid 2056 (Fa. Kronos) und 0,2 g des jeweiligen Pigments wurde auf einer Farbausreibemaschine (Fa. Engelsmann) mit 2 x 50 Umdrehungen bei 50 kg Belastung ausgerieben, mit einer Schichtdicke von 400 µm auf eine Glasscheibe aufgezogen und 15 min bei 160°C eingebrannt.

Die CIELAB-Werte wurden anschließend mit einem Zeiss-Spektralphotometer RFC 16 unter Verwendung der Normlichtart D65 gemessen und in Färbeäquivalente umgerechnet.

Den PVC-Ausfärbungen, die das jeweils analog, jedoch ohne Zusatz des Metallsalzes hergestellte Pigment enthielten, wurde der FAE-Wert 100 (Standard) zugeordnet. FAE-Werte < 100 bedeuten eine höhere Farbstärke als beim Standard, FAE-Werte > 100 entsprechend eine kleinere Farbstärke.

### Beispiel 1

40 g Metatitansäure (80 Gew.-% TiO₂), 11,6 g Antimontrioxid, 4,4 g Mangan(II)carbonat und 1,2 g Natriumsulfat wurden intensiv vermischt. Die erhaltene Mischung wurde anschließend in einem elektrisch beheizten Kammerofen 120 min bei 1100°C calciniert.

30 g des nach Abkühlen erhaltenen relativ weichen Calcinierungsprodukts wurden nach Zugabe von 60 g Wasser unter Verwendung von 250 g Glasperlen (1 mm Durchmesser) 35 min in einer Fliehkraftmühle (300 ml Mahlvolumen) gemahlen. Nach Abtrennung der Glasperlen wurde das Mahlgut mit Wasser gewaschen und bei 120°C getrocknet.

Das erhaltene farbstarke braune Rutilmischphasenpigment hatte einen FAE-Wert von 62.

### Beispiel 2

Es wurde analog Beispiel 1 vorgegangen, jedoch wurden 2,0 g Natriumsulfat eingesetzt, und es wurde bei 1080°C calciniert.

Das erhaltene farbstarke braune Rutilmischphasenpigment hatte einen FAE-Wert von 56.

### Beispiel 3

Es wurde analog Beispiel 1 vorgegangen, jedoch wurden anstelle von 1,2 g Natriumsulfat 2,8 g Natriumnitrat eingesetzt, und es wurde bei 1130°C calciniert.

Das erhaltene farbstarke braune Rutilmischphasenpigment hatte einen FAE-Wert von 59.

### Beispiel 4

Es wurde analog Beispiel 1 vorgegangen, jedoch wurden anstelle von 1,2 g Natriumsulfat 1,6 g Natriumchlorid eingesetzt, und es wurde bei 1130°C calciniert.

Das erhaltene farbstarke braune Rutilmischphasenpigment hatte einen FAE-Wert von 65.

### Beispiel 5

Es wurde analog Beispiel 1 vorgegangen, jedoch wurden anstelle von 1,2 g Natriumsulfat 2,8 g Kaliumnitrat eingesetzt.

Das erhaltene farbstarke braune Rutilmischphasenpigment hatte einen FAE-Wert von 65.

### Beispiel 6

Es wurde analog Beispiel 1 vorgegangen, jedoch wurde eine Mischung von 10 g Metatitansäure (80 Gew.-% TiO₂), 21,3 g Antimontrioxid, 66 g Mangan(II)carbonat und 2,9 g Natriumsulfat eingesetzt.

Das erhaltene farbstarke braune Rutilmischphasenpigment hatte einen FAE-Wert von 70.

### Beispiel 7

Es wurde analog Beispiel 6 vorgegangen, jedoch wurden anstelle von 2,9 g Natriumsulfat 2,9 g Natriumnitrat eingesetzt, und es wurde bei 1130°C calciniert.

Das erhaltene farbstarke braune Rutilmischphasenpigment hatte einen FAE-Wert von 66.

### Beispiel 8

Es wurde analog Beispiel 1 vorgegangen, jedoch wurde eine Mischung von 40 g Metatitansäure (80 Gew.-% TiO₂), 2,4 g Antimontrioxid, 4,0 g Mangan(II)carbonat und 1,3 g Natriumsulfat eingesetzt.

Das erhaltene farbstarke braune Rutilmischphasenpigment hatte einen FAE-Wert von 75.

### Beispiel 9

100 kg Metatitansäure (80 Gew.-% TiO₂), 29 kg Antimontrioxid, 11 kg Mangan(II)carbonat und 4,5 kg Natriumsulfat wurden intensiv vermischt. Die erhaltene Mischung wurde anschließend in einem

Drehrohrofen unter Einleiten von Luft (1 m³/h) bei 1100°C und einem Durchsatz von 6,5 kg/h calciniert.

Die Mahlung des Calcinierungsprodukts wurde analog Beispiel 1 vorgenommen.

Das erhaltene farbstarke braune Rutilmischphasenpigment hatte einen FAE-Wert von 61.

## Patentansprüche

1. Mangan-Antimon-Rutilmischphasenpigmente, erhältlich durch Calcinierung der Oxide oder Oxidhydrate von Mangan, Antimon und Titan oder in die Oxide überführbarer Salze dieser Metalle in Gegenwart eines oder mehrerer Natrium- und/oder Kaliumsalze.

2. Mangan-Antimon-Rutilmischphasenpigmente nach Anspruch 1, erhältlich durch Calcinierung in Gegenwart von 0,5 bis 4 Gew.-% des Natrium- und/oder Kaliumsalzes, berechnet jeweils als Natrium oder Kalium und bezogen auf die calcinierte Rohmischung.

3. Mangan-Antimon-Rutilmischphasenpigmente nach Anspruch 1 oder 2, erhältlich durch Calcinierung in Gegenwart eines oder mehrerer Natrium- und/oder Kaliumsalze aus der Gruppe der Nitrate, Sulfate, Carbonate, Chloride und Hydroxide.

4. Mangan-Antimon-Rutilmischphasenpigmente nach den Ansprüchen 1 bis 3, die 5 bis 90 Gew.-% Titandioxid, 3 bis 70 Gew.-% Manganoxid, berechnet als Mangan(II)oxid, 5 bis 40 Gew.-% Antimon(V)oxid und 0,02 bis 4 Gew.-% Natrium und/oder Kalium enthalten.

5. Mangan-Antimon-Rutilmischphasenpigmente nach den Ansprüchen 1 bis 4, die eine Primärteilchengröße von ≤ 0,3 µm aufweisen.

6. Verfahren zur Herstellung von Mangan-Antimon-Rutilmischphasenpigmenten gemäß den Ansprüchen 1 bis 5, dadurch gekennzeichnet, daß man die Oxide oder Oxidhydrate von Titan, Mangan und Antimon oder in die Oxide überführbare Salze dieser Metalle intensiv mit dem Natrium- und/oder Kaliumsalz mischt und die erhaltene Mischung unter oxidierenden Bedingungen bei 900 bis 1200°C calciniert.

7. Verfahren nach Anspruch 6, dadurch gekennzeichnet, daß man das Calcinierungsprodukt einer Trockenmahlung oder einer Naßmahlung mit anschließender Trocknung unterzieht.

8. Verwendung von Mangan-Antimon-Rutilmischphasenpigmenten gemäß den Ansprüchen 1 bis 5 zur Einfärbung von Kunststoffen, Lacken, Druckfarben und keramischen Glasuren.
